Europäisches Patentamt

(19) **European Patent Office**

Office européen des brevets

(11) Publication number: **0 240 322**
**B1**

(12) # EUROPEAN PATENT SPECIFICATION

(45) Date of publication of the patent specification:
23.05.90

(51) Int. Cl.⁵: **C08F 4/64, C08F 10/00**

(21) Application number: **87302809.6**

(22) Date of filing: **31.03.87**

(54) **Catalyst components for alpha olephine-polymerizing catalysts and procedure for manufacturing same.**

(30) Priority: **01.04.86 FI 861389**

(43) Date of publication of application:
**07.10.87 Bulletin 87/41**

(45) Publication of the grant of the patent:
**23.05.90 Bulletin 90/21**

(84) Designated Contracting States:
**AT BE CH DE ES FR GB GR IT LI LU NL SE**

(56) References cited:
**US-A- 4 421 674**

(73) Proprietor: **NESTE OY, Keilaniemi,
SF-02150 Espoo 15(FI)**

(72) Inventor: **Garoff, Thomas, Borgstr.grand 4 K,
SF-00840 Helsinki(FI)**

(74) Representative: **Lamb, John Baxter et al, MARKS &
CLERK 57/60 Lincoln's Inn Fields, London
WC2A 3LS(GB)**

## Description

The invention concerns catalyst components for alpha olephine-polymerizing catalysts which consist of an organoaluminium compound, an electron donor and a solid catalyst component which has been obtained when a compound containing magnesium has reacted with a titanium halogen compound. The invention also concerns a procedure for manufacturing these catalyst components and a procedure for polymerizing alpha olephines, in particular propylene, making use of said catalyst components.

For polymerizing alpha olephines, prior art knows catyalysts with high activity which have been manufactured of an aluminium alkyl compound, of an electron donor and of a halogenated titanium compound on a carrier substance comprising various magnesium compounds. For magnesium compound usually chlorinated magnesium compounds have been used, which may be for instance water-free magnesium chloride along or together with other magnesium compounds, or an organic magnesium compound which has been prepared by halogenating organic magnesium compounds with the aid of compounds containing chlorine.

In polymerizing catalysts of this type, the properties of the solid carrier component have a significant influence on the properties of the ultimate catalyst, for instance on its activity. These properties can be substantially influenced through the mode of manufacturing the carrier component.

The present invention concerns catalyst components in which the carrier component has been prepared from compounds containing magnesium, which may be natural minerals or synthetic minerals. There is nothing novel in itself in the use of magnesium minerals for starting material in preparing inert carrier components for Ziegler-Natta catalysts to the purpose of polymerizing olephines.

It has turned out to be difficult to manufacture, from various magnesium compounds and from minerals containing them, active Ziegler-Natta catalysts, in particular those for the polymerizing of propylene, because in these processes the catalysts are highly sensitive to moisture and to the crystal water contained in the carrier. Minimal quantities of crystal water already reduce the activity of the catalyst significantly. Moreover, those synthesis procedures which are in use have very many steps and they are labourious if it is desired to use for starting material various magnesium compounds with or without crystal water.

The present invention relates to catalyst components for those alpha olephine-polymerizing catalysts which consist of an organoaluminium compound, an external electron donor and a solid catalyst component which has been obtained when a solid carrier component containing magnesium has reacted with a titanium halogen compound and which are free of the drawbacks mentioned and, therefore, are fit to be used in polymerizing propylene.

The catalyst component of the invention is characterized in that it has been composed by making a solid carrier component, which has been prepared
(a) by dissolving, or suspending, a magnesium compound soluble in ethanol or water;
(b) by adding to the solution, or suspension, a substantially stoichiometric quantity of hydrochloric acid;
(c) by drying the ethanol solution of the magnesium component with the aid of periodic azeotropic distillation; and
(d) by precipitating the solid carrier component from the ethanol solution
react with a titanium halogen compound in the presence of an internal electron donor or without electron donor.

The invention also concerns a procedure for manufacturing catalyst components for alpha olephine-polymerizing catalysts which consist of an organoaluminium compound, an external electron donor and a solid catalyst component containing magnesium which has been obtained when a solid carrier component containing magnesium has reacted with a titanium halogen compound. The procedure of the invention is characterized in that said catalyst component is produced by making a solid carrier component which has been prepared
(a) by dissolving, or suspending, a magnesium compound soluble in ethanol or water;
(b) by adding to the solution a substantially stoichiometric quantity of hydrochloric acid;
(c) by drying the ethanol solution of the magnesium component with the aid of periodic azeotropic distillation; and
(d) by precipitating the solid carrier component from the ethanol solution
react with a titanium halogen compound in the presence of an internal electron donor or without electron donor.

The catalyst component of the invention and the carrier component used therein afford several advantages over carrier components containing magnesium which have been prepared by conventional synthesis techniques. For instance, in manufacturing the carrier component it is possible to use an open reaction vessel, and because the synthesis is not sensitive to oxygen nor to moisture an inert nitrogen atmosphere is not absolutely indispensable in the synthesis, and so-called wet salts and minerals may be used in the manufacturing process.

It is possible in manufacturing the catalyst component of the invention to use for starting material containing magnesium, both organic and inorganic magnesium compounds. Suitable organic magnesium compounds are, for instance, magnesium acetate, magnesium formiate, $Mg_2(OOC-C_6H_5-COO)_2$ magnesium etholate, magnesium metholate and magnesium propylate. Suitable inorganic magnesium compounds are, among others, magnesium oxide, magnesium carbonate and magnesium hydroxide. It is equally possible to use for starting material many minerals containing magnesium, examples of such being $Mg_2(CO_3)(OH)_2.3H_2O$, $MgCO_3.2H_2O$, $CaMg(CO_3)_2$, $Mg_5(CO_3)_4(OH)_2.5H_2O$, $Mg(C_2O_4).2H_2O$, $CaMg_3(CO_3)_4$, $Mg_5(CO_3)_4(OH)_2.4H_2O$, $Mg_2Cl(OH)_3.4H_2O$, $MgCO_3.5H_2O$, $MgF_2$, $MgSi(OH)_2.H_2O$ and $CaMg_2Cl_6.12H_2O$.

The first step in preparing the catalyst component of the invention is dissolving, or suspending, the magnesium compound in water or alcohol. Dissolving in alcohol is preferable because then the water quantities that have to be removed are substantially less. The alcohcol may be methanol, ethanol or propanol. However, ethanol is the most suitable choice. Hydrochloric acid is now added to the solution, or suspension, in a quantity substantially stoichiometrically equivalent to that of magnesium. The hydrochloric acid may be in gaseous or liquid form. However, concentrated aqueous solution of hydrochloric acid (38%) is the most suitable choice.

The hydrochloric acid is advantageously added in the form of concentrated aqueous solution. On addition of hydrochloric acid the magnesium compound is completely dissolved when the pH of the suspension has gone down far enough. Such a quantity of hydrochloric acid is added that pH goes down at least to 3, preferably even down to 1. If too little hydrochloric acid is added, a great part of the magnesium may remain undissolved.

As taught by the invention, the crystal water is removed by distil ling, with the aid of periodic azeotropic distillation. During this distillation, an azeotropic mixture of alcohol and water escapes from the solution, whereby the water quantity is reduced. By adding new water-free ethanol to the solution and by repeated distillation, total removal of crystal water from the magnesium component is accomplished.

The number of azeotropic distilling runs required depends on the amount of water present in the solution and on the intended use of the catalyst. If the catalyst is intended to be used in polymerizing ethylene, fewer runs are needed, for instance 1 to 5 runs. When manufacturing a carrier component for propylene polymerizing, nearly water-free carrier is required, and experience bas revealed that this is achieved if the number of distilling runs is 8 to 15, advantageously 10 to 12. The water content of the carrier component can then be brought down to 0.3 moles of crystal water, which may be considered the upper limit for propylene-polymerizing catalysts.

After drying out the crystal water, precipitation of the magnesium carrier component is effected by transferring the dried ethanol solution into a cold solvent, whereby the magnesium component will precipitate. Suitable solvents are common organic hydrocarbons used as solvents. Heptane is a highly appropriate solvent for the reason that its boiling point is high enough so that in the titanizing step which has to be carried out subsequently titanium has time to react, and on the other hand it is low enough to avoid melting of the carrier component in the titanizing step.

When the ethanol solution containing magnesium component is added into cold heptane, the carrier component is precipitated in finely divided form. After washing and drying, the carrier component is titanized with the aid of titanium tetrachloride in a manner known in itself in the art, for producing the catalyst component.

Titanizing may be accomplished for instance in that the solid carrier component is mixed with a titanium halogen compound once or several times. Before, during or after the titanizing process the catalyst component may furthermore be treated with the aid of an internal electron donor compound. The titanizing is preferably accomplished in two steps between which may be added internal electron donor, which is usually an amine, ether or ester of its type. A suitable donor is, for instance, diisobutylphthalate, of which the quantity may be 0.05 to 0.3, most appropriately 0.2 mol/mol Mg.

In the first step a low temperature is to be recommended, e.g. below 0°C, preferable below -20°C. The second titanizing step may be carried out at higher temperature, e.g. at 85 to 110°C, a reaction time of 1-1.5 hours being sufficient. The solid reaction product is then separated from the liquid phase and washed with hydrocarbon solvents to remove impurities and derivatives. The catalyst component may be dried in light vacuum or in nitrogen gas at room temperature, or at slightly elevated temperature, and it may be homogenized by grinding it in a ball mill.

The catalyst component of the invention may then be used to polymerize alpha olephines by allowing it to come into contact with an Al compound and an external compound releasing electrons. In the role of external compounds releasing electrons may be used, for instance: amines, ethers, esters (preferably alkyl and arylesters or aromatic carboxylic acids), or silane compounds (alkyl/aryl silanes), examples of such being, among others, the methyl and ethyl esters of benzoic, toluic and phthalic acid, etc. Said electron donors are compounds which are able to enter complexes with Al alkyls. The stereospecificity of the catalyst can be improved with their aid.

The external compound releasing electrons, or donor, and the Al alkyl are mixed together, the molar proportion of the compound releasing electrons to the Al compound being about 20 and the Al/Ti molar proportion being between 10 and 300, depending on the polymerizing system. Polymerizing may be carried out either as slurry or bulk polymerizing, or in the gas phase.

Catalyst components and catalysts prepared as taught by the invenion may be used to polymerize alpha olephines, such as ethylene, propylene and butylene, by the slurry, bulk and gas phase methods, but the catalyst components of the invention are particularly well suited for use in polymerizing propylene because in them the quantity of crystal water in the carrier substance is singularly low and, as a result, the activity of the catalysts is particularly high especially regarding polymerizing of propylene.

The invention is more closely illustrated in the following examples.

Example 1

10 g dark brucite (Mg(OH)$_2$) were suspended in 100 ml ethanol and titrated with 20 ml conc. hydrochloric acid (38%) to pH 1. Drying of the ethanol solution was carried out by azeotropic distillation. The drying process consumed 1900 ml absolute ethanol (moisture content < 100 ppm $H_2O$) and the distillation took place in a slow nitrogen flow. When the dry (moisture content 421 µg $H_2O$/0,1 ml) hot ethanol/carrier solution was transferred, with mixing, into cold (-20°C) heptane, the carrier component crystallized. The carrier component was henceforward kept in inert conditions ($N_2$). The carrier component was transferred into cold titanium tetrachloride (400 ml, -20°C). After the mixture had warmed up to room temperature, 0.2 mol/mol Mg of diisobutylphthalate were added thereto, whereafter the catalyst component was allowed to settle. The titanium tetrachloride solution was once exchanged for new solution and the treatment repeated. The completed catalyst component was washed with heptane and dried with nitrogen. The yield was 1.2 g, and the catalyst contained: Mg 0.7%, Ti 2.9%, and Cl 53.0%.

The carrier component prepared in the way just described was applied in propylene polymerizing, adding into a 2-litre polymeriz ing reactor catalyst which had been prepared by mixing, as aluminium alkyl compound, triethylaluminium and, as Lewis compound, diphenylmethoxysilane (Al donor mole proportion: 20) in 50 ml heptane and admixing to this, after 5 minutes, carrier component so as to make the Al/Ti molar proportion 200. Polymerizing was carried out in conditions as follows: propylene partial pressure 9.0 bar, hydrogen partial pressure 0.3 bar, temperature 70°C, and polymerizing time 3 hrs.

The activity of the catalyst was found to be 1.3 kg PP per g of catalyst in 3 hours.

Example 2

As in Example 1, a catalyst component was prepared from light-coloured brucite (Mg(OH)$_2$). The yield was 1.2 g, and the catalyst contained: Mg 9.4%, Ti 3.4%, and Cl 46.0%. In a polymerizing run the activity was found to be 2.7 kg PP per g of catalyst in 3 hours.

Example 3

10 g Mg(CH$_3$CO$_2$)$_2$.4H$_2$O were suspended in 300 ml ethanol. 7.7 ml conc. hydrochloric acid (38%) were added. Drying of the ethanol/carrier component solution was carried out with the aid of azeotropic distillation. The drying process consumed 800 ml absolute ethanol (moisture content less than 100 ppm $H_2O$). The distillation took place in a slight nitrogen flow. When the dry (moisture content < 400 µg $H_2O$/0,1 ml) hot ethanol carrier component solution was transferred into 500 ml of cold heptane, with mixing, the carrier component crystallized. The carrier component was henceforward processed in inert conditions ($N_2$). The extra ethanol was washed off with two heptane washings, and thereafter the carrier component was transferred into 500 ml of cold TiCl$_4$ (-20°C). After the mixture had warmed up to room temperature, 0.1 mol/mol Mg of diisobutylphthalate were added. The mixture was boiled for 1 hr at 100°C, whereafter the catalyst was allowed to settle and the titanium tetrachloride solution was exchanged for new solution and the treatment repeated. The completed catalyst component was washed with heptane and dried with nitrogen. The yield was 6.3 g and it contained: Mg 3.5%, Ti 7.0%, Cl 28.0% and Si 14.0%.

The catalyst was used to polymerize propylene as in Example 1, and its activity was 1 kg PP per g of catalyst in 3 hours.

Example 4

10 g Mg(OCH$_2$CH$_3$)$_2$ were suspended in 300 ml ethanol, 14.5 ml conc. hydrochloric acid (38%) were added. Drying of the ethanol/carrier solution was carried out by azeotropic distillation. The drying process consumed 1500 ml absolute ethanol (moisture content < 400 ug $H_2O$/0.1 ml). The distillation took place in a slow nitrogen flow. When the dry (moisture content < 400 µg $H_2O$/0,1 ml) hot ethanol/carrier solution was transferred, with mixing, into cold heptane, the carrier component crystallized. The carrier component was henceforward processed in inert conditions ($N_2$). The carrier component was transferred into 400 ml cold titanium tetrachloride (-20°C). After the mixture had warmed up to room temperature, 0.2 mol/mol Mg of diisobutylphthalate were added. The mixture was boiled for 1 hr at 110°C, whereafter the catalyst component was allowed to settle and the titanium tetrachloride solution was once exchanged for new solution and the treatment repeated. The completed catalyst component was washed with heptane and dried with nitrogen. the yield was 0.2 g, and it contained: Mg 8.0%, Ti 6.0%, and Cl 57.0%. The catalyst was used to polymerize propylene as in Example 1, and its activity was 2.2 kg PP per g of catalyst in 3 hours.

**Claims**

1. A process for the manufacture of a catalyst component for an alpha-olefin polymerization catalyst comprising an organoaluminium compound, an external electron donor and a solid catalyst component obtained by reaction of a solid carrier component containing magnesium with a titanium halogen compound, which process comprises:

   a) dissolving, or suspending, a magnesium compound soluble in ehtanol or water;

   b) adding to the solution a substantially stoichiometric quantity of hydrochloric acid;

   c) drying the ethanolic solution of the magnesium component by periodic azeotropic distillation;

   d) precipitating a solid carrier component from the ethanol solution; and

   e) reacting the solid carrier component with a titanium halogen compound in the presence of an internal electron donor or without an electron donor.

2. A process according to claim 1, characterized in that the magnesium compound is Mg(CH3COO)$_2$, Mg(CHOO)$_2$, Mg$_2$(O-CO-C$_6$H$_5$COO)$_2$, or a hydrate thereof.

3. A process according to claim 1 or claim 2, characterized in that the alcohol used to dissolve or suspend the magnesium compound is ethanol.

4. A process according to any one of the preceding claims, characterized in that after azeotropic distillation drying the carrier component is precipitated by the addition of an organic hydrocarbon solution.

5. A process according to claim 4, characterized in that the hydrocarbon is heptane.

6. A process according to any one of the preceding claims, characterized in that in the drying the ethanol solution 1 to 15 azeotropic distillation runs are effected.

7. An olefin polymerization catalyst comprising an organoaluminium compound, an external electron donor and a solid catalyst component obtained by a process as claimed in any one of the preceding claims.

8. A process for polymerizing an olefin, especially propylene, using a catalyst as claimed in claim 7.

## Patentansprüche

1. Verfahren zur Herstellung einer Katalysatorkomponente für einen Katalysator zur Polymerisation von Alpha-Olefinen, der eine Organoaluminiumverbindung, einen Donator von externen Elektronen und eine durch Umsetzung einer magnesiumhaltigen Feststoffträgerkomponente mit einer Titan-Halogen-Verbindung erhaltene Feststoffkatalysatorkomponente umfasst, wobei das Verfahren umfasst:
   a) Auflösen oder Suspendieren einer in Ethanol oder Wasser löslichen Magnesiumverbindung;
   b) Beigeben einer im wesentlichen stöchiometrischen Menge Salzsäure zur Lösung;
   c) Trocknen der ethanolischen Lösung der Magnesiumkomponente durch periodische azeotropische Destillation;
   d) Fällen einer Feststoffträgerkomponente aus der Ethanollösung; und
   e) Umsetzen der Feststoffträgerkomponente mit einer Titan-Halogen-Verbindung in Gegenwart eines Donators von internen Elektronen oder ohne Elektronendonator.

2. Verfahren nach Anspruch 1, dadurch gekennzeichnet, dass die Magnesiumverbindung $Mg(CH_3COO)_2$, $Mg(CHOO)_2$, $Mg_2(O-CO-C_6H_5COO)_2$ oder ein Hydrat davon ist.

3. Verfahren nach Anspruch 1 oder 2, dadurch gekennzeichnet, dass der zum Auflösen oder Suspendieren der Magnesiumverbindung verwendete Alkohol Ethanol ist.

4. Verfahren nach einem der vorangehenden Ansprüche, dadurch gekennzeichnet, dass die Feststoffträgerkomponente nach dem Trocknen durch azeotropische Destillation durch Beigabe einer Lösung eines organischen Kohlenwasserstoffs gefällt wird.

5. Verfahren nach Anspruch 4, dadurch gekennzeichnet, dass der Kohlenwasserstoff Heptan ist.

6. Verfahren nach einem der vorangehenden Ansprüche, dadurch gekennzeichnet, dass beim Trocknen der Ethanollösung 1 bis 15 Läufe von azeotropischer Destillation durchgeführt werden.

7. Katalysator zur Polymerisation von Olefinen, umfassend eine Organoaluminiumverbindung, einen Donator von externen Elektronen und eine Feststoffkatalysatorkomponente, die nach einem Verfahren gemäss einem der vorangehenden Ansprüche erhalten worden sind.

8. Verfahren zur Polymerisation eines Olefins, insbesondere Propylen, bei welchem ein Katalysator gemäss Anspruch 5 verwendet wird.

## Revendications

1. Un procédé pour la fabrication d'un composant de catalyseur pour un catalyseur de polymérisation des α-oléfines comprenant un composé organoaluminique, un donneur d'électrons externe et un composant de catalyseur solide obtenu par réaction d'un composant support solide contenant du magnésium avec un composé halogéné du titane, lequel procédé comprend:
   a) la dissolution ou la mise en suspension d'un composé de magnésium soluble dans l'éthanol ou l'eau;
   b) l'addition à la solution d'une quantité sensiblement stœchiométrique d'acide chlorhydrique;
   c) le séchage de la solution éthanolique du composant au magnésium par distillation azéotropique périodique;
   d) la précipitation d'un composant support solide à partir de la solution dans l'éthanol; et
   e) la réaction du composant support solide avec un composé halogéné du titane en présence d'un donneur d'électrons interne ou sans donneur d'électrons.

2. Un procédé selon la revendication 1, caractérisé en ce que le composé du magnésium est $Mg(CH_3COO)_2$, $Mg(CHOO)_2$, $Mg_2(O-CO-C_6H_5COO)_2$ ou un hydrate de ceux-ci.

3. Un procédé selon la revendication 1 ou la revendication 2, caractérisé en ce que l'alcool utilisé pour dissoudre ou mettre en suspension le composé de magnésium est l'éthanol.

4. Un procédé selon l'une quelconque des revendications précédentes, caractérisé en ce que, après le séchage par distillation azéotropique, le composant support est précipité par l'addition d'une solution d'hydrocarbure organique.

5. Un procédé selon la revendication 4, caractérisé en ce que l'hydrocarbure est l'heptane.

6. Un procédé selon l'une quelconque des revendications précédentes, caractérisé en ce que, dans le séchage de la solution éthanolique, on effectue 1 à 15 opérations de distillation azéotropique.

7. Un catalyseur de polymérisation des oléfines comprenant un composé organoaluminique, un donneur d'électrons externe et un composant de catalyseur solide obtenu par un procédé selon l'une quelconque des revendications précédentes.

8. Un procédé pour la polymérisation d'une oléfine, en particulier du propylène, utilisant un catalyseur selon la revendication 7.